# FASCICULE DE BREVET EUROPEEN

(11) **EP 0 885 943 B1**
(45) Date de publication et mention de la délivrance du brevet: **07.06.2006**
(21) Numéro de dépôt: 98401479.5
(22) Date de dépôt: 17.06.1998
(51) Int. Cl.: C09K 3/30, A21D 8/08

(54) **Mélange propulseur et les préparations alimentaires en aérosol le contenant**
Treibgasmischung und diese enthaltende Nahrungsmitteln in Aerosolform
Propellant composition and foodstuff aerosol containing it

(30) Priorité: 19.06.1997 FR 9707650
(43) Date de publication de la demande: 23.12.1998
(73) Titulaire: Boehringer Ingelheim Alimentaire (S.A.), 67802 Bischheim Cédex (FR)
(72) Inventeur: Cornu Thenard, Claude c/o Boehringer Ingelheim Al., 67802 Bischheim Cedex (FR)
(74) Mandataire: Burtin, Jean-François

(56) Documents cités:
- WO-A-96/01056
- FR-A- 2 279 842
- FR-A- 2 725 455
- US-A- 3 661 605
- US-A- 4 073 412

## Description

La présente invention se rapporte à l'industrie alimentaire et plus particulièrement à des compositions alimentaires pressurisées, destinées à la lubrification ou au démoulage, ainsi qu'à un dispositif de mise en oeuvre sous forme d'aérosol.

La présente invention concerne en particulier des compositions contenant un mélange propulseur à teneur réduite en hydrofluorocarbures, caractérisé en ce qu'il est formé d'une combinaison d'un hydrofluorocarbure de formule chimique CF₃ - CH₂F et d'un gaz comprimé inerte choisi parmi le dioxyde de carbone et le protoxyde d'azote.

L'art antérieur de la technique enseigne que les préparations alimentaires et notamment les compositions de lubrification ou de démoulage sont largement utilisées dans la production à l'échelle industrielle, artisanale ou domestique des préparations culinaires. En particulier ces compositions trouvent un emploi particulièrement fréquent comme agent de démoulage utilisé en boulangerie, en pâtisserie, en biscuiterie ou pour le graissage des tôles de cuisson.

Selon l'état de la technique, ces compositions alimentaires, notamment lorsqu'elles se présentent sous forme liquide, sont conditionnées en bidons ou récipients analogues, et il est alors nécessaire de les utiliser par application au pinceau, au pistolet ou au chiffon. Il en résulte une application imprécise, peu efficace et peu hygiénique, surtout dans le cadre d'une fabrication alimentaire à l'échelle industrielle ou artisanale. En outre, dans le cas particulier des agents lubrifiants ou des agents de démoulage, à base de matières grasses, une application excessive a des répercussions sur l'apport lipidique des aliments, et par conséquent sur leurs caractéristiques diététiques ou organoleptiques. Une application insuffisante compromet au contraire le démoulage.

Afin de faciliter la mise en oeuvre de certaines substances alimentaires, et en particulier l'usage des agents de démoulage dans le secteur de la boulangerie et de la pâtisserie, on a conditionné ces substances dans des boîtiers aérosols, dans lesquels la substance en question est un mélange liquide à base d'huile, de cires végétales et/ou d'un agent émulsionnant du type lécithine, l'ensemble de la préparation étant mélangé à un agent propulseur qui permet sa répartition facile et homogène.

Ainsi après différents essais on a utilisé comme agent propulseur des dérivés fluorocarbonés ou fluorochlorocarbonés connus sous l'abréviation CFC, dont l'avantage est d'être complètement inertes. Cependant on a constaté que l'utilisation des CFC comme agents propulseurs n'était pas anodine. Les CFC ont des propriétés jugées néfastes vis à vis de l'environnement. Ils sont en particulier susceptibles de contribuer à la détérioration de la couche d'ozone autour de la terre ce qui induit une augmentation de l'effet de serre et une augmentation du rayonnement ultra violet au niveau du sol.

L'opinion publique a pris conscience du fait qu'à moyen terme il était nécessaire de trouver des substituts aux CFC, et on a proposé d'utiliser pour propulser des substances alimentaires, des aérosols dans lesquels l'agent propulseur était constitué par du diméhyléther (D.M.E.) ou par un mélange de gaz butane/propane. Si de telles substances facilitent la vaporisation de la substance alimentaire, elles peuvent aussi se révéler dangereuses pour certaines utilisations, du fait de leur caractère très facilement inflammable. En particulier, l'utilisation de D.M.E. ou du mélange de gaz butane/propane à titre d'agent propulseur comporte des risques d'inflammabilité des gaz employés pour former l'aérosol, et constitue de ce fait un problème de sécurité, en particulier lors de l'utilisation intempestive de ces produits à proximité d'une flamme ou lors d'une opération de cuisson.

L'objet de l'invention était donc d'obtenir une composition alimentaire facilitant le démoulage ou le graissage des récipients alimentaires et présentée sous forme d'aérosol, qui permette de diminuer les inconvénients ou les risques décrits ci-dessus et qui soit économique.

Le problème de l'invention a été résolu selon une solution qui consiste en ce qu'on utilise un mélange propulseur gazeux totalement inerte, dont la teneur en CFC est considérablement réduite et dont le risque d'inflammabilité est pratiquement inexistant.

Le mélange propulseur des compositions selon l'invention est formé d'une quantité majoritaire de 1,1,1,2-tétrafluoroéthane de formule chimique CF₃ - CH₂F, dénommé également hydrofluorocarbure 134 A, et d'une quantité minoritaire de protoxyde d'azote N₂O et/ou de dioxyde de carbone CO₂

Il est possible d'additionner le tétrafluoroéthane, soit d'une quantité inférieure de protoxyde d'azote, soit de gaz carbonique, soit d'un mélange de ces deux gaz. La quantité de gaz comprimé utilisée quoique faible par rapport à celle de dérivé fluoré suffit pour assurer une bonne propulsion.

Ces deux gaz sont totalement inertes dans les conditions d'emploi. L'emploi du protoxyde d'azote peut être remplacé par d'autres gaz inertes comme l'azote ou même l'air comprimé.

D'une manière préférée, le mélange propulseur sera composé d'une quantité de tétrafluoroéthane comprise entre 80 et 98 % du mélange et d'une quantité de dioxyde de carbone et/ou de protoxyde d'azote qui s'échelonne de 2 à 20 %. D'une manière préférée, on prépare des mélanges propulseurs qui renferment de 110 à 170 g de tétrafluoroéthane pour 3 à 20 g de protoxyde d'azote et/ou de dioxyde de carbone. On prépare également des mélanges propulseurs à base de dioxyde de carbone qui renferment de 1 à 7 g de dioxyde de carbone pour 40 à 60 g de tétrafluoroéthane.

Un mélange préféré contient par exemple entre 40 et 60 g de tétrafluoroéthane et entre 1 et 7 g de gaz comprimé dioxyde de carbone et/ou protoxyde d'azote. Ces mélanges propulseurs présentent l'avantage d'une inertie chimique complète et permettent de réduire l'utitisation de CFC. Dans le présent cas, l'hydrofluorocarbure joue un rôle de solvant du produit à pulvériser et le ou les gaz comprimés agissent comme agent propulseur.

Les compositions alimentaires selon l'invention comportent également une phase liquide, qui renferme des huiles et/ou des matières grasses alimentaires additionnées ou non d'eau en quantité limitée, d'autres ingrédients et/ou d'additifs.

Plus particulièrement les additifs sont des agents émulsionnants, des cires, des agents antioxydants, des sels et/ou des arômes.

La quantité d'eau que l'on peut incorporer à la préparation sera comprise entre 0,5 et 5 %. Une teneur plus élevée peut entraîner la formation d'émulsion ou provoquer des bouchages.

Parmi les huiles végétales utilisées dans les compositions de démoulage selon l'invention on pourra citer l'huile d'arachide, l'huile d'olive, l'huile de tournesol, l'huile de palme, l'huile de soja, l'huile de coco, l'huile de colza, l'huile de pépin de raisins, les monoglycérides à chaîne moyenne (MCT) ou des mélanges de celles-ci.

Comme agent émulsionnant on peut se baser sur les émulsionnants autorisés dans l'alimentation, et en particulier sur la lécithine.

Comme cires susceptibles d'être incorporées à la composition selon l'invention, on nommera les cires naturelles comme la cire d'abeilles, la cire de Carnauba ou la cire Montana. On peut utiliser également des cires synthétiques comme les esters d'acides gras et d'alcools gras du type Sperma ceti.

Comme agent antioxydant, on utilisera de préférence des substances phénoliques ou acides qui empêchent ou retardent le rancissement des matières grasses présentes dans la composition. On citera à cet effet l'acide sorbique et ses sels, les esters d'acide ascorbique avec un alcool gras, la vitamine E et les différents tocophérols. En tout état de cause les différents ingrédients de la composition selon l'invention devront être adaptés aux dispositions réglementaires en vigueur.

La présente invention concerne également un procédé de réalisation des compositions de lubrification ou de démoulage selon l'invention qui consiste à soumettre le mélange lipidique, préalablement préparé dans un flacon pour aérosol, à une surpression modérée et passagère de dioxyde de carbone et/ou de protoxyde d'azote, en solution dans le tétrafluoroéthane qui facilite la dispersion dudit dioxyde de carbone ou protoxyde d'azote dans le milieu.

La surpression est calculée de telle manière que la pression résiduelle dans le flacon pour aérosol soit conforme à la réglementation des aérosols en vigueur.

L'invention concerne encore la mise en oeuvre de la composition lubrifiante ou de démoulage dans le domaine de l'industrie alimentaire et plus particulièrement pour assurer le démoulage des préparations de l'industrie de la boulangerie, de la pâtisserie ou de la biscuiterie. Cette mise en oeuvre consiste à appliquer par pulvérisation d'une manière égale et suffisamment importante une pellicule de la composition selon l'invention sur la face des moules, récipients ou ustensiles de cuisine qui est en contact avec la préparation alimentaire.

Pour obtenir une bonne pulvérisation, il peut être préféré d'utiliser une valve femelle plutôt qu'une valve mâle, en particulier lorsque la viscosité de la phase huileuse choisie est élevée.

De même le diamètre de l'orifice du diffuseur est adapté à la viscosité de l'ingrédient alimentaire.

De cette façon après cuisson, il sera possible de retirer ou de faire s'écouler la préparation alimentaire sans perte de produit ou sans difficulté d'extraction.

Les compositions lubrifiantes ou de démoulage selon l'invention trouvent ainsi un usage comme agent de graissage et de démoulage des plaques et moules de cuisson, notamment en boulangerie pour la fabrication de pain de mie, de baguettes, de pâtes à tarte, de pâte à pizza, ou pour le démoulage de produits de longue conservation comme les produits de confiserie, les pains d'épices, les cakes, pour le démoulage des produits de cuisson domestiques dans les poêles à frire, les casseroles et les bassines, ainsi que comme agent de lubrification pour les machines de traitement agro-alimentaire, notamment pour machines diviseuses de pâte ou pour les machines trancheuses de pain.

Les compositions selon l'invention seront pulvérisées sur la surface concernée pendant une à trois secondes de façon à ce qu'une pellicule homogène soit répartie sur toute la surface.

En particulier dans le cas d'un flacon aérosol de dimensions 65 x 195 mm, on utilise pour 350 g d'ingrédients alimentaires entre 40 et 60 g de tétrafluoroéthane et entre 1 et 7 g de gaz comprimé dispersé dans l'hydrofluorocarbure.

Un exemple typique de préparation de démoulage selon l'invention a la composition suivante:
- huile margarine végétale semi-liquide 350 g
- 1,1,1,2 tétrafluoroéthane commercialisé sous la dénomination HFC 134 A 49 g
- protoxyde d'azote 5 g

L'huile margarine végétale semi-liquide est composée d'huiles végétales, de 2 % d'eau, d'agents émulsionnants (E322, E471 et E472C), de sel, de lait écrémé en poudre et d'aromates.

### Propriétés

### Composition en acide gras

| | |
|---|---|
| C16.0 | 5.0 |
| C18.0 | 4.0 |
| C18.1 | 49.0 |
| C18.2 | 31.0 |
| C18.3 | 7.0 |
| C20.0 | 1.0 |
| C22.0 | 2.0 |

La quantité de fluorocarbure à pulvériser peut varier de 40 à 60 grammes.

A titre de comparaison un mélange similaire contenant seulement l'huile et le tétrafluoroéthane comme agent propulseur, nécessitera la présence de 80 g de CFC. La réduction des quantités de tels carbures est donc considérable.

## Revendications

1. Compositions pressurisées, destinées à la lubrification ou au démoulage, **caractérisées en ce qu'**elles sont formées d'une phase liquide composée d'huiles et/ou de matières grasses alimentaires, ainsi que d'une phase gazeuse constituée de tétrafluoroéthane (hydrofluorocarbure 134A) agissant comme solvant et d'une quantité minoritaire de protoxyde d'azote et/ou de dioxyde de carbone.

2. Compositions selon la revendication 1, **caractérisées en ce que** le protoxyde d'azote et/ou le dioxyde de carbone agissent comme agent propulseur.

3. Compositions selon la revendication 1, **caractérisées en ce que** le tétrafluoroéthane est additionné d'une quantité inférieure de protoxyde d'azote.

4. Compositions selon la revendication 1 ou la revendication 2, **caractérisées en ce que** le tétrafluoroéthane est additionné de protoxyde d'azote et de dioxyde de carbone.

5. Compositions selon l'une des revendications 1 à 4, **caractérisées en ce que** la quantité de tétrafluoroéthane est comprise entre 80 et 98 % du mélange total et **en ce que** la quantité de protoxyde d'azote et/ou de dioxyde de carbone s'échelonne de 2 à 20 %.

6. Compositions selon la revendication 5, **caractérisées en ce qu'**elles renferment 3 à 20 g de protoxyde d'azote et/ou de dioxyde de carbone pour 110 à 170 g de tétrafluoroéthane.

7. Compositions selon la revendication 5 ou la revendication 6, **caractérisées en ce qu'**elles contiennent entre 1 et 7 g de dioxyde de carbone et/ou de protoxyde d'azote pour une quantité comprise entre 40 et 60 g de tétrafluoroéthane.

8. Compositions selon l'une des revendications 1 à 7, **caractérisées en ce qu'**elles renferment également une quantité limitée d'eau.

9. Compositions selon la revendication 8, dans laquelle la quantité limitée d'eau incorporée à la préparation, est comprise entre 0,5 et 5%.

10. Compositions selon l'une des revendications 1 à 9, **caractérisées en ce qu'**elles renferment également des additifs choisis parmi les agents émulsionnants, les cires, les agents anti-oxydants, les sels minéraux et les arômes.

11. Procédé de réalisation des compositions selon l'une des revendications 1 à 10, qui consiste à préparer en premier lieu un mélange lipidique dans un flacon pour aérosol, à ajouter une solution de dioxyde de carbone et/ou de protoxyde d'azote dans le tétrafluoroéthane, à assurer une surpression modérée et passagère de dioxyde de carbone et/ou de protoxyde d'azote, à poser et à sertir la valve sur un récipient monobloc puis à mettre en place la buse de pulvérisation.

12. Utilisation des compositions selon l'une des revendications 1 à 10, comme agent de graissage ou de démoulage pour les tôles et les moules de cuisson.

13. Utilisation des compositions selon l'une des revendications 1 à 10, comme agent de lubrification pour les machines de traitement agro-alimentaires, notamment pour les machines diviseuses de pâte ou pour les machines trancheuses de pain.

14. Utilisation des compositions selon la revendication 12 ou la revendication 13, en quantité variant de 40 à 60 grammes, pour le démoulage ou le graissage des tôles et des moules de cuisson.

## Claims

1. Pressurized compositions designed for lubrication and demoulding, **characterized in that** they are formed by a liquid phase of dietary oils and/or fats and by a gas phase of tetrafluoroethane (hydrofluorocarbon 134A) acting as a solvant and of a minor amount of nitrous oxide and/or of carbon dioxide.

2. Compositions according to claim 1, **characterized in that** the nitrous oxide and/or the carbon dioxide act as propulsive agents.

3. Compositions according to claim 1, **characterized in that** the tetrafluoroethane is admixed with a lower amount of nitrous oxide.

4. Compositions according to claim 1 or claim 2, **characterized in that** tetrafluoroethane is admixed with nitrous oxide and carbon dioxide.

5. Compositions according to one of the claims 1 to 4, **characterized in that** the amount of tetrafluoroethane is comprised between 80 and 98 % of the whole mixture and **in that** the amount of nitrous oxide and/or of carbon dioxide is comprised between 2 and 20 %.

6. Compositions according to claim 5, **characterized in that** they include between 3 and 20 g of nitrous oxide and/or of carbon dioxide per 110 to 170 g of tetrafluoroethane.

7. Compositions according to claim 5 or claim 6, **characterized in that** they include between 1 and 7 g of nitrous oxide and/or of carbon dioxide per 40 to 60 g of tetrafluoroethane.

8. Compositions according to one of the claims 1 to 4, **characterized in that** they further include a restricted amount of water.

9. Compositions according to claim 5, **characterized in that** the restricted amount of water included in the mixture ranges between 0,5 and 5%.

10. Compositions according to one of the claims 1 to 9, **characterized in that** they further include additives selected among emulsifiers, waxes, anti-oxidative agents, mineral salts and flavours.

11. Process for the achievement of compositions according to one of the claims 1 to 10, which consists in preparing a lipid mixture in a aerosol flask, to add a solution of nitrous oxide and/or of carbon dioxide in tetrafluoroethane, to set a moderated and transitional nitrous oxide and/or carbon dioxide pressure, to settle and set the valve on a monoblock vessel and to set the spray nozzle.

12. Use of the compositions according to one of the claims 1 to 10, as greasing or demoulding means for cooking plates or pans.

13. Use of the compositions according to one of the claims 1 to 10, as lubricating agents for agri-food machines, especially for paste-dividing or bread-cutting machines.

14. Use of the compositions according to claim 12 or claim 13, in amounts ranging from between 40 and 60 g, for demoulding or greasing cooking plates or pans.

## Patentansprüche

1. Unter Druck stehende Zusammensetzungen zum Fetten oder zum Entformen, **dadurch gekennzeichnet, dass** sie gebildet sind aus einer flüssigen Phase, die aus Ölen und/oder Speisefetten zusammengesetzt ist, sowie aus einer gasförmigen Phase, die aus Tetrafluorethan (Fluorkohlenwasserstoff 134A), der als Lösemittel wirkt, und einer Minderheitsmenge an Distickstoffmonoxid und/oder Kohlendioxid zusammengesetzt ist.

2. Zusammensetzungen nach Anspruch 1, **dadurch gekennzeichnet, dass** das Distickstoffmonoxid und/oder das Kohlendioxid als Treibmittel dienen.

3. Zusammensetzungen nach Anspruch 1, **dadurch gekennzeichnet, dass** das Tetrafluorethan mit einer geringeren Menge an Distickstoffmonoxid versetzt ist.

4. Zusammensetzungen nach Anspruch 1 oder Anspruch 2, **dadurch gekennzeichnet, dass** das Tetrafluorethan mit Distickstoffmonoxid und Kohlendioxid versetzt ist.

5. Zusammensetzungen nach einem der Ansprüche 1 bis 4, **dadurch gekennzeichnet, dass** die Menge an Tetrafluorethan zwischen 80 und 98 % des gesamten Gemisches beträgt und dass die Menge an Distickstoffmonoxid und/oder Kohlendioxid von 2 bis 20 % beträgt.

6. Zusammensetzungen nach Anspruch 5, **dadurch gekennzeichnet, dass** sie von 3 bis 20 g Distickstoffmonoxid und/oder Kohlendioxid für 110 bis 170 g Tetrafluorethan enthalten.

7. Zusammensetzungen nach Anspruch 5 oder Anspruch 6, **dadurch gekennzeichnet, dass** sie zwischen 1 und 7 g Kohlendioxid und/oder Distickstoffmonoxid für eine Menge an Tetrafluorethan zwischen 40 und 60 g enthalten.

8. Zusammensetzungen nach einem der Ansprüche 1 bis 7, **dadurch gekennzeichnet, dass** sie auch eine begrenzte Menge an Wasser enthalten.

9. Zusammensetzungen nach Anspruch 8, wobei die in der Zubereitung enthaltene begrenzte Menge an Wasser zwischen 0,5 und 5 % beträgt.

10. Zusammensetzungen nach einem der Ansprüche 1 bis 9, **dadurch gekennzeichnet, dass** sie auch Zusätze enthalten, die unter Emulgatoren, Wachsen, Antioxidanzien, Mineralsalzen und Aromen gewählt werden.

11. Verfahren zur Herstellung der Zusammensetzungen nach einem der Ansprüche 1 bis 10, das darin besteht, zuerst in einer Aerosolflasche eine Fettmischung herzustellen, eine Lösung von Kohlendioxid und/oder Distickstoffmonoxid in Tetrafluorethan zuzugeben, für einen mäßigen und vorübergehenden Überdruck von Kohlendioxid und/oder Distickstoffmonoxid zu sorgen, das Ventil an einem Monoblock-Behälter anzusetzen und aufzuquetschen und sodann die Zerstäubungsdüse anzubringen.

12. Verwendung der Zusammensetzungen nach einem der Ansprüche 1 bis 10 als Mittel zum Fetten oder Entformen für Bleche und Backformen.

13. Verwendung der Zusammensetzungen nach einem der Ansprüche 1 bis 10 als Schmiermittel für Lebensmittelverarbeitungsmaschinen, insbesondere für Maschinen zum Teilen von Teig oder für Maschinen zum Schneiden von Brot.

14. Verwendung der Zusammensetzungen nach Anspruch 12 oder Anspruch 13 in einer Menge von 40 bis 60 Gramm zum Entformen oder Fetten von Blechen und Backformen.
